# EUROPÄISCHE PATENTSCHRIFT

(11) **EP 0 748 645 B1**
(45) Veröffentlichungstag und Bekanntmachung des Hinweises auf die Patenterteilung: **16.08.2000**
(21) Anmeldenummer: 96109261.6
(22) Anmeldetag: 10.06.1996
(51) Int. Cl.: B01D 33/073, B01D 33/72

(54) **VERFAHREN ZUR VERWENDUNG EINES ROTIERENDEN FILTERS**
METHOD USING A ROTATING FILTER
PROCEDE D'UTILISATION D' UN FILTRE ROTATIF

(30) Priorität: 16.06.1995 DE 19521963
(43) Veröffentlichungstag der Anmeldung: 18.12.1996
(73) Patentinhaber: NYFOTEK A.S., 7034 Trondheim (NO)
(72) Erfinder: Lundin, Eric Gustaf, 840 50 Gällö (SE)
(74) Vertreter: Tomerius, Isabel

(56) Entgegenhaltungen:
- WO-A-90/07968
- US-A- 3 152 078
- US-A- 3 392 114
- US-A- 3 443 696

## Beschreibung

Die Erfindung bezieht sich auf ein Filter zur Ausfilterung von Partikeln aus einem Fluid, mit einem in einem Filtergehäuse drehbar angeordneten Filterelement, welches im wesentlichen trommelförmig ausgebildet ist und eine Struktur aufweist, die von dem Fluid von außen nach innen durchströmbar ist.

Es sind allgemein Filter bekannt, bei denen ein mit Verunreinigungen in Form von Partikeln behaftetes Fluid durch die Poren eines Filtermediums gedrückt oder angesaugt wird. Dabei bleiben die Partikeln auf dem Filtermedium zurück, während das Fluid durch das Filtermedium hindurchtritt. Ein solches mit Poren versehenes Filtermedium besitzt einen gewissen Strömungswiderstand, der sich im Laufe der Zeit mit zunehmendem Verschmutzungsgrad des Filtermediums vergrößert. Nach einer bestimmten Zeit wird der Strömungswiderstand so groß, daß das Filtermedium gereinigt werden muß. Dies verursacht einen erheblichen Arbeitsaufwand und verursacht auch Kosten.

Eine Vorrichtung, bei welcher Partikeln aus einem Fluid mit Hilfe eines rotierenden Filters ausfiltriert werden, ist aus der US-A-3,443,696 bekannt.

Der Erfindung liegt die **Aufgabe** zu Grunde, ein Filterverfahren zu schaffen, wobei das Filter sich weitgehend selbst reinigt und praktisch alle Partikeln aus einem Fluid ausfiltriert.

Diese Aufgabe wird erfindungsgemäß durch ein Filter gelöst, welches sich dadurch auszeichnet, daß das Filterelement mit einer derart hohen Drehzahl in Rotation zu versetzen ist, daß praktisch alle Partikeln, die in der Fluidströmung in den Bereich des Filterelementes gelangen, von der Struktur des Filterelementes getroffen und nach außen geschleudert werden, daß die Fluidströmung im wesentlichen tangential auf das Filterelement geführt ist und daß die Umfangsrichtung der Fluidströmung der Rotationsrichtung des Filterelementes entspricht.

Das Filter ist strömungsmäßig so ausgestaltet, daß das Fluid innerhalb des Filters auf einer kreisförmigen Bahn am Filterelement entlangströmt, wobei das Fluid durch das Filterelement hindurchtreten kann, während in dem Fluid enthaltene Partikeln durch das mit entsprechend hoher Drehzahl rotierende Filterelement weggestoßen werden.

Eine besonders gute Filterwirkung ergibt sich, wenn die Strömungsrichtung des Fluids mit der Drehrichtung des Filterelementes übereinstimmt.

Ein Vorteil des erfindungsgemäßen Filters besteht darin, daß die auszufilternden Partikeln sich nicht in den Poren des Filterelementes festsetzen oder auf dem Filterelement ablagern können und das Filterelement somit nicht verschmutzt. Daher muß das Filterelement nicht ausgewechselt und praktisch nicht gereingt werden. Die auszufilternden Partikeln sinken vielmehr im Filtergehäuse nach unten und lagern sich dort ab. Das Filtergehäuse weist an seiner Unterseite eine Auslaufschleuse auf, durch die die abgelagerten Partikeln entfernt werden können.

Vorteilhafte Weiterbildungen des Erfindungsgegenstandes sind Gegenstand der Unteransprüche.

Die Erfindung wird nachfolgend an Hand von Ausführungsbeispielen erläutert, die in den Figuren dargestellt sind. Es zeigen:
- Fig. 1: schematisch Ausführungsbeispiel des erfindungsgemäßen Filters;
- Fig. 2: schematisch einen Querschnitt durch ein erfindungsgemäßes Filter;
- Fig. 3: eine schematische Darstellung zur Veranschaulichung des Filterungsprinzip gemäß der Erfindung;
- Fig. 4: ein weiteres Ausführungsbeispiel des erfindungsgemäßen Filters und
- Fig. 5: ein weiteres Ausführungsbeispiel eines erfindungsgemäßen Filters.

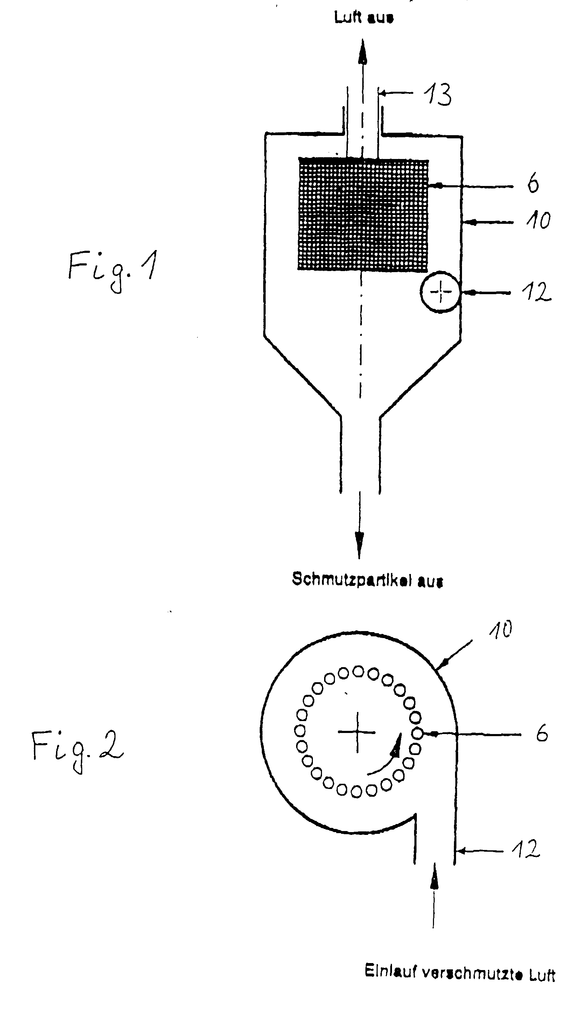

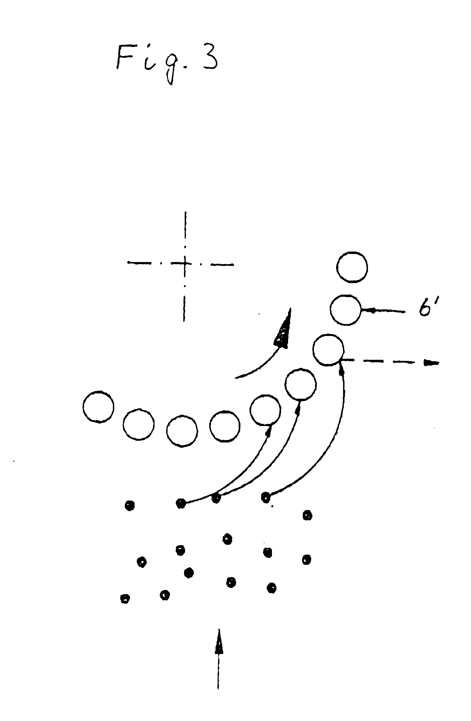

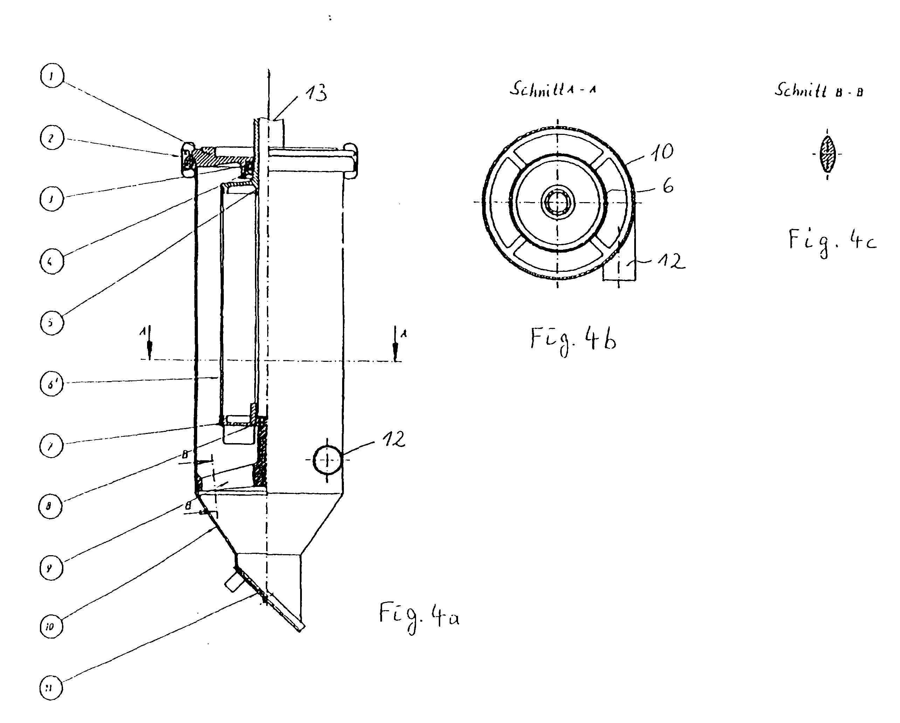

Das Filter weist gemäß den Figuren 1 und 2 ein Filtergehäuse 10 auf, in dem ein Filterelement 6 drehbar gelagert ist. Das Filtergehäuse 10 weist eine im wesentlichen zylinderförmige Form auf, die an ihrem unteren Ende trichterförmig ausgebildet ist. In einem unteren Bereich des Filtergehäuses befindet sich ein Einlauf 12 für ein zu filterndes Fluid. Das Filtergehäuse 10 und der Einlauf 12 sind so ausgestaltet, daß das durch den Einlauf eintretende Fluid im wesentlichen senkrecht zur Längsachse und tangential zur Wand des zylinderförmigen Filtergehäuses 10 in das Filter hineinströmt. An der Oberseite des Filtergehäuses 10 befindet sich ein Auslauf 13 für das gefilterte Fluid.

Das Filterelement 6 besitzt ebenfalls im wesentlichen zylinderförmige Außenkonturen. Das Filterelement 6 ist derart im Filtergehäuse 10 gelagert, daß zwischen der Wand des Filtergehäuses 10 und der Außenkontur des Filterelements 6 ein Abstand eingehalten ist.

In diesem Bereich strömt das durch den Einlauf 12 tangential zur Wand des Filtergehäuses 10 einströmende Fluid um das Filterelement 6 herum, bis das Fluid durch das Filterelement hindurchtritt und über den Auslauf 13 aus dem Filter wieder herausströmt. Es bildet sich somit eine Strömung aus, die um das Filterelement 6 herum läuft. Die Drehrichtung dieser Strömung stimmt mit der Drehrichtung des rotierenden Filterelements 6 überein.

Die Arbeitsweise des erfindungsgemäßen Filters wird nun an Hand der Figur 3 beschrieben. Das im Bereich um das rotierende Filterelement umlaufende Fluid weist auf seiner Kreisbahn eine wesentlich kleinere Umfangsgeschwindigkeit auf als das Filterelement. Dies gilt natürlich auch für die im Fluid mitströmenden Partikeln, auf die wegen der kreiskreisförmigen Bewegung eine Zentrifugalkraft wirkt, die vom Filterelement weg gerichtet ist.

Wenn jedoch das Fluid durch das Filterelement hindurchtritt, um durch den Auslauf 13 gereinigt das Filter zu verlassen, werden trotz der Fliehkraft die auszufilternden Partikeln in Richtung des Filterelementes mitgerissen. Dabei treffen sie jedoch auf das mit genügend hoher Drehzahl rotierende Filterelement auf, prallen von diesem ab und verbleiben somit auf einer Umlaufbahn im Bereich zwischen dem Filterelement 6 und dem Gehäuse 10. Dieser Vorgang kann sich vielmals wiederholen, bis schließlich die umlaufenden Partikeln aufgrund der Schwerkraft nach unten sinken und sich im Unterteil des Filtergehäuses ablagern. Da die gegen das Filterelement prallenden Partikeln wegen der hohen Drehzahl des Filterelementes von diesem zurückgestoßen werden, bevor sie in Poren eines Filterelementes eindringen können, und die auch wegen der auf sie wirkenden Fliehkraft nicht genügend Energie besitzen, um in den Poren eines Filtermediums stecken zu bleiben, tritt keine Verschmutzung des Filterelementes auf.

Optimale Strömungsverhältnisse im Bereich zwischen dem Filterelement 6 und dem Filtergehäuse 10 liegen dann vor, wenn möglichst wenig Turbulenz herrscht. Insbesondere an der Wand des Filtergehäuses befindet sich eine laminare Oberflächen-Strömungsschicht. Es sinken die Partikeln vorzugsweise in dieser Schicht nach unten. Die Partikel geraten in diese Schicht einmal dadurch hinein, daß auf sie die Fliehkraft wirkt, und zum anderen dadurch, daß sie vom Filterelement abprallen.

Eine besonders gleichmäßige Strömungsverteilung wird dadurch unterstützt, daß der Einlauf 12 unten und der Auslauf 13 oben am Filtergehäuse 10 angeordnet sind. Dadurch ergibt sich eine nach oben gerichtete kreisförmige Strömung im Abstandsbereich mit sehr gleichmäßiger Verteilung des mit Partikeln beladenen Fluids über die gesamte Oberfläche des Filterelements.

Als Filtermedium kommen praktisch alle gängigen Filtermaterialien zur Anwendung, sofern diese eine in Zylinderlängsrichtung verlaufende Struktur aufweisen. Es können jedoch auch glatte Filtertücher verwendet werden, wie im nachstehenden noch im einzelnen angegeben ist.

Für das erfindungsgemäße Filter geeignete Filterelemente 6 können im wesentlichen folgenden Aufbau haben: Zwischen einem tellerförmigen Oberteil und einem tellerförmigen Unterteil is ein rohrförmiges Filterelement angebracht. Im Oberteil befindet sich in der Mitte eine Öffnung, durch die das gefilterte Fluid austreten kann. Das Oberteil und/oder das Unterteil sind im Filtergehäuse drehbar gelagert.

Ein Filterelement besteht gemäß Fig. 1 aus einem Gitterblech. Die Maschen des Gitterblechs sind in Längs- und Querrichtung zur Drehachse des Filterelements angeordnet. Wesentlich für die Filterwirkung sind die in Zylinderlängsrichtung verlaufenden Stege des Gitterblechs.

Bei einer anderen Ausführung besteht das Filterelement lediglich aus längsverlaufenden Stäben, die gleichmäßig über den Umfang verteilt sind. Der Abstand zwischen den Stäben beträgt beispielsweise 1 mm, die Stabdicke beispielsweise 4 mm. Das Filterelement hat beispielsweise einen Durchmesser von 6 bis 8 cm und eine Höhe von beispielsweise 20 cm. Die Stäbe oder das Gitterblech können mit einem Filtertuch bespannt sein welches dann als "Filtermedium" bezeichnet werden könnte.

Bei einer dritten Ausführung eines Filterelements ist zwischen dem Oberteil und dem Unterteil ein Filtertuch gespannt. Als Filtertuch ist besonders ein Gewebe geeignet, das in Zylinderlängsrichtung verlaufende dickere Fäden und in Umfangsrichtung verlaufende dünnere Fäden aufweist. Gegenüber einem Gitterblech oder gegenüber Stäben tritt bei einem Filterelement, das mit einem Filtertuch bespannt ist, dieselbe Filterwirkung bereits bei geringerer Drehgeschwindigkeit des Filterelementes auf. Diese vorteilhafte Wirkung ist durch die dichtere Anordnung der für die Filterwirkung wesentlichen vertikalen Strukturelemente bedingt. Natürlich muß trotzdem das Filtertuch genügend große Durchlässe für das zu filternde Fluid aufweisen. Aufgrund der niedrigeren Drehgeschwindigkeit sind die Belastung der Lager und die Stärke von durch eine eventuell auftretende Unwucht ausgelösten Vibrationen geringer.

Bei einer weiteren Ausführung hat das Filterelement einen Keramikhohlkörper, der von seiner Außenseite sich bis ins Innere zum Auslauf hin erstreckende Poren aufweist. Diese Ausführung ist insbesondere zur Filterung von Flüssigkeiten geeignet.

Fig. 4a zeigt einen Querschnitt durch ein weiteres Ausführungsbeispiel eines erfindungsgemäßen Filters. Das Filtergehäuse 10 besitzt eine im wesentlichen rotationszylinderförmige Gestalt. Das Filtergehäuse 10 ist an seinem oberen Ende durch einen Deckel 1 verschlossen, der mittels Klammern 2 am Filtergehäuse befestigt ist. In der Mitte des Deckels befindet sich ein Kugellager 3, in dem das Oberteil 5 des Filterelements 6 gelagert ist. Der Lagerschaft des Oberteils 5 ist hohl und erstreckt sich durch eine entsprechende Öffnung im Deckel 1 durch diesen Deckel hindurch. Der hohle Lagerschaft des Oberteils 5 bildet den Auslauf 13, durch den das gefilterte Fluid das Filter verlassen kann.

Eine Drehdichtung 4 dichtet den Deckel 1 im Bereich des Kugellagers 3 gegen den Lagerschaft des Filterelements 6 ab.

Das untere Ende des Filtergehäuses 10 verjüngt sich trichterförmig und endet in einem Stutzen mit einer Auslaufschleuse 11. Durch Öffnen der Auslaufschleuse kann der im unteren Teil des Filtergehäuses angesammelte Schmutz entfernt werden. Oberhalb der trichterförmigen Verjüngung des Filtergehäuses 10 befindet sich ein Lagerbock 9, der ein in der Mitte des Filtergehäuses 10 angeordnetes Kugellager 8 trägt. Der Lagerbock 9 weist vier radial verlaufende Streben auf (vgl. Schnittzeichnung gemäß Fig. 4b), die sich radial zur Wand des Filtergehäuses 10 hin erstrecken und durch die der Lagerbock 9, mit dem Filtergehäuse 10 verbunden ist.

Im unteren Bereich des Filtergehäuses 10, jedoch oberhalb der Streben des Lagerbocks 9 befindet sich der Einlauf 12 für das zu filternde Fluid.

Zwischen dem Oberteil 5 und dem Unterteil 7 befindet sich ein Filtermedium, beispielsweise ein Filtertuch. An der Unterseite des Unterteils 7 ist eine Vielzahl von radial verlaufenden Lamellen angebracht, deren unteres Ende sich ungefähr auf Höhe des Einlaufs 12 befindet. Das Oberteil 5, das Filtermedium und das Unterteil 7 bilden einen Rotor, der über den Lagerschaft von außen antreibbar ist. Durch die am Unterteil 7 angeordneten Lamellen, die wie ein Gebläse wirken, wird das durch den Einlauf 12 hereinströmende Fluid zu einer kreisförmigen Strömung im Abstandsbereich zwischen dem rotierenden Filtermedium und der Wand des Filtergehäuses 10 veranlaßt.

Fig. 4b zeigt einen Querschnitt durch das Filter, an Hand dessen die zentrische Lage des Filterelementes 6 innerhalb des Filtergehäuses 10 zu erkennen ist. Ferner sind die Streben des Lagerbocks 9 sowie die Anordnung des Einlaufs 12 erkennbar.

In Fig. 4c ist ein Querschnitt durch eine Strebe des Lagerbocks 9 dargestellt. Die Streben besitzen einen länglichen, ellipsenförmigen Querschnitt. Die im Abstandsbereich zwischen dem Filterelement 6 und der Wand des Filtergehäuses 10 herabsinkenden Partikeln fallen daher zwischen den Streben hindurch in die trichterförmige Verjüngung des Filtergehäuses 10, ohne sich auf den Streben abzulagern.

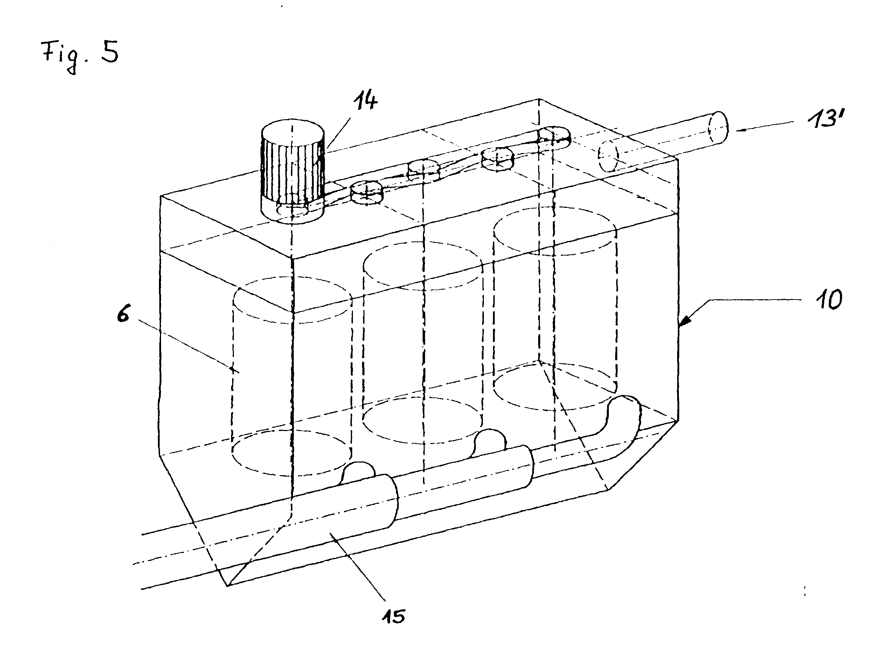

In Fig. 5 ist schematisch eine Ausführung eines erfindungsgemäßen Filters dargestellt, bei der drei Filterelemente 6 innerhalb eines gemeinsamen Filtergehäuses 10 nebeneinander angeordnet sind.

Unten seitlich am Filtergehäuse 10 befindet sich ein Verteilerrohr 15, durch das das zu filternde Fluid auf drei, den drei Filterelementen 6 zugeordnete Einläufe verteilt wird. An der Oberseite des Filtergehäuses 10 befindet sich ein gemeinsamer Auslauf 13'. Ferner ist oben auf dem Filtergehäuse 10 eine Antriebsmaschine 14 angeordnet, die über einen Treibriemen oder andere geeignete Antriebsmittel die drei Filterelemente 6 in Rotation versetzen kann. Das Filtergehäuse ist in zwei Kammern unterteilt, wobei sich in der einen Kammer die rotierenden Filterelemente 6 befinden. Die Ausläufe der drei Filterelemente münden in die zweite Kammer mit dem gemeinsamen Auslauf 13'.

## Patentansprüche

1. Verfahren zum Ausfiltern von Partikeln aus einem Fluid, wobei in einem Filtergehäuse ein Filterelement drehbar angeordnet ist, welches im wesentlichen trommelförmig in Form eines zylindrischen Käfigs ausgebildet ist und eine Struktur aufweist, die von dem Fluid von außen nach innen durchströmt wird, worin die Fluidströmung im wesentlichen tangential auf das Filterelement (6) geführt wird und die Umfangsrichtung der Fluidströmung der Rotationsrichtung des Filterelementes (6) entspricht,
dadurch **gekennzeichnet**,
daß die Struktur des Filterelementes (6) durch im wesentlichen parallel zu seiner Längsachse verlaufende Stäbe (6') gebildet wird und das Filterelement mit einer derart hohen Drehzahl rotiert, daß praktisch alle Partikeln, die in der Fluidströmung in den Bereich des Filterelementes gelangen, von der Struktur des Filterelementes getroffen und nach außen geschleudert werden, ohne sich auf dem Filterelement abzulagern.

2. Verfahren nach Anspruch 1,
dadurch **gekennzeichnet,**
daß das gereinigte Fluid durch einen Auslauf (13) abgezogen wird, der im wesentlichen zentrisch an der Oberseite des Filtergehäuses (10) angeordnet ist.

3. Verfahren nach Anspruch 1 oder 2,
dadurch **gekennzeichnet**,
daß die ausfiltrierten Partikeln durch eine Auslaufschleuse (11) an der Unterseite des Filtergehäuses (10) abgezogen werden.

## Claims

1. Process for filtering out particles from a fluid, wherein a filter element is arranged rotatably in a filter housing which is shaped substantially cylindrically in the form of a cylindrical cage and having a structure through which the fluid flows from the outside to the inside, wherein the fluid flow is directed substantially tangentially to the filter elelement (6) and the circumferential direction of the fluid flow corresponds to the rotational direction of the filter element (6),
**characterized** in that
the structure of the filter element (6) is formed by bars (6') running substantially parallel to its longitudinal axis, and the filter element is rotated at such a high speed that virtually all the particles coming in the fluid flow into the vicinity of the filter element strike against the structure of the filter element, rebound therefrom and are ejected to the outside, without being deposited on the filter element.

2. Process according to claim 1,
**characterized** in that
the cleaned fluid is drawn out through an outlet (13) which is positioned substantially centrally on the top of the filter housing (10).

3. Process according to claim 1 or 2,
**characterized** in that
the particles filtered out are removed through a discharge lock (11) on the underside of the filter housing (10).

## Revendications

1. Procédé de séparation par filtration de particules contenues dans un fluide, un élément filtrant étant placé rotatif dans un boîtier de filtre, élément qui est conformé pour l'essentiel en tambour de la forme d'une cage cylindrique et qui présente une structure qui est traversée par le fluide de l'extérieur vers l'intérieur, dans lequel l'écoulement de fluide est envoyé pour l'essentiel de manière tangentielle sur l'élément filtrant (6) et la direction circonférentielle de l'écoulement de fluide correspond à la direction de rotation de l'élément filtrant (6), ***caractérisé en ce que*** la structure de l'élément filtrant (6) est formée par des barreaux (6') s'étendant pour l'essentiel parallèlement à son axe longitudinal et l'élément filtrant tourne à une vitesse de rotation tellement élevée que pratiquement toutes les particules qui arrivent dans l'écoulement de fluide au niveau de l'élément filtrant sont arrêtées par la structure de l'élément filtrant et propulsées vers l'extérieur, sans se déposer sur l'élément filtrant.

2. Procédé selon la Revendication 1, ***caractérisé en ce que*** le fluide nettoyé est extrait par une sortie (13), qui est placée pour l'essentiel en position centrée sur la face supérieure du boîtier de filtre (10).

3. Procédé selon la Revendication 1 ou 2, ***caractérisé en ce que*** les particules filtrées sont extraites à travers un sas de sortie (11) sur la face inférieure du boîtier de filtre (10).
